# EUROPEAN PATENT APPLICATION

(11) **EP 0 588 510 A1**
(43) Date of publication of application: **23.03.1994**
(21) Application number: 93306641.7
(22) Date of filing: 20.08.1993
(51) Int. Cl.: H04M 3/54, H04M 3/42

(54) **Call routing scheme with verification of called party presence**

(30) Priority: 31.08.1992 US 937922
(71) Applicant: AT&T Corp., New York, NY 10013-2412 (US)
(72) Inventor: Berkowitz, Patricia Ann, Little Silver, New Jersey 07739 (US)
(74) Representative: Johnston, Kenneth Graham

(57) **Abstract**

A call routing technique wherein an incoming communications for a called party is routed to a destination only after an identification signal is received from the destination indicating the called party's presence. If such identification is not received, the call may be routed to another destination, such as a voice mail system. One or more destinations may be specified by the called party and the identification signal may take a variety of forms, such as a predetermined sequence of touch-tone digits or spoken words.

## Description

### Technical Field

The present invention relates to communications systems incorporating call routing and, more particularly, to such systems wherein an incoming communications is routed to a destination only upon receiving verification of the called party's presence at t hat destination.

### Background of the Invention

Call routing refers to the general processing of a multi-digit number entered by a calling party in an attempt to reach a called party associated with the entered number. This processing is provided within the public network and also within private networks, such as a Private Branch Exchange (PBX). Call forwarding, also known as call redirection, is a species of call routing which is widely used in many communications systems. In call forwarding, a prospective called party having an associated destination may designate an alternative destination to which incoming communications are transferred upon a predetermined condition. Such conditions, include those where the incoming communications is not answered within a specified number of rings or when the called party is busy receiving one communications when another arrives.

In more recent applications, such as that disclosed in U.S. Patent No. 5,027,384 to Morganstein, entitled "Personalized Automatic Call Routing", issued June 25, 1991, a system is disclosed which permits a prospective called party to specify a number of alternative destinations for an incoming communications and the system will forward the call to such destinations upon the occurrence of a predetermined condition. While such systems permit the called party to receive or be at least notified of incoming communications while occupied with another call or away from his/her communications device, a call will be forwarded to the specified alternative destination and the called party may or may not be there. This situation results in the incoming communications still being missed by the intended called party.

With the busy schedule of many individuals today, it would be highly desirable if a call routing scheme could be devised which would assure a greater percentage of incoming communications reaching the intended called party.

### Summary of the Invention

In accordance with the present invention, a prospective called party can activate a communications system to route incoming communications for that called party to a final destination specified by the called party. A communications for the called party causes apparatus to signal the final destination of the incoming communications. Upon receiving an off-hook signal from a communications device at the final destination, the apparatus requests a predetermined identifierfrom the off-hook device which indicates the called party's presence at the final destination. The incoming communications is routed to the final destination only if the predetermined identifier is received. If this identifier is not received, the communications may be routed to an alternative default destination, such as a voice mail system. Also, one or more final destinations may be specified by a prospective called party and the identifier requested may take a variety of forms, such as one or more predetermined digits or spoken words.

### Brief Description of the Drawing

FIG. 1 is a block-schematic diagram of an illustrative communications system which incorporates the present invention either within a PBX or as an adjunct thereto;
FIG. 2 is block-schematic diagram of the PBX shown in the system of FIG. 1;
FIG. 3 is a block schematic of circuitry for implementing the present invention as an adjunct to a PBX; and
FIG. 4 is a flowchart of the operations carried out by either the call processor in the PBX or the feature processor in the adjunct in the two disclosed embodiments of the present invention.

### Detailed Description

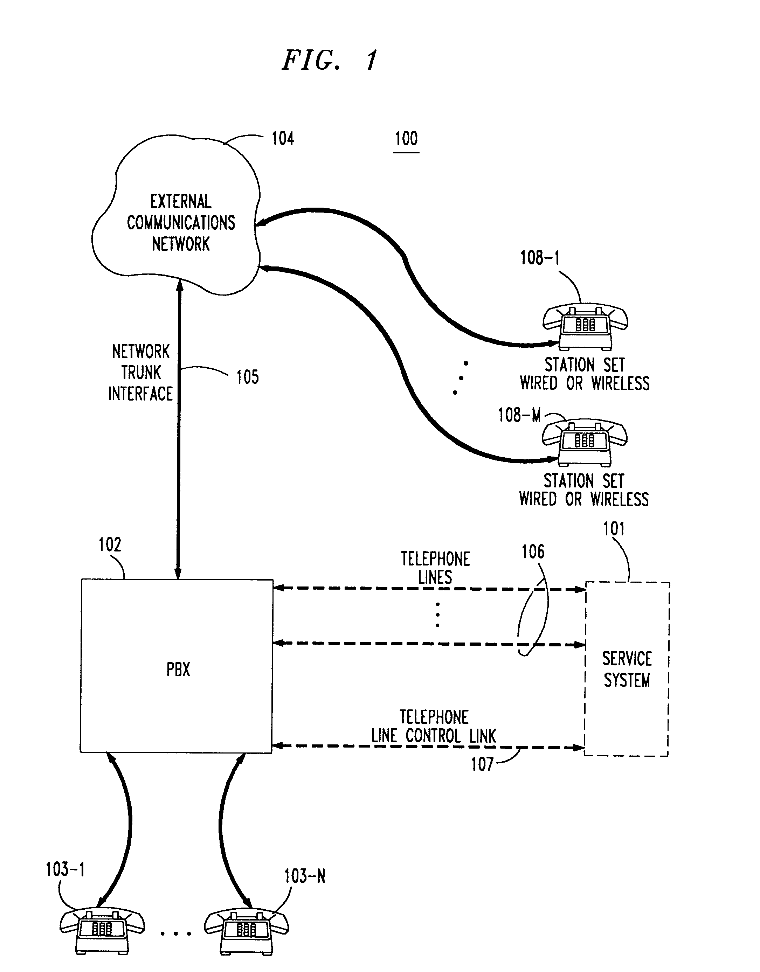

As shown in FIG. 1, PBX 102 in communications system 100 provides the interconnection function for communications between a plurality of internal communications devices 103-1 through 103-N and between at least one such device and at least one of external communications devices 108-1 through 108-M. Each of these devices can provide eitherwired and/or wireless communications. The terms M and N are preselected integers with M generally substantially greater than N. The adjectives internal and external with regard to the referenced communications devices respectively refer to devices which are directly connected to the "station side" of the PBX and to those which are connected to the PBX through external communications network 104 and network trunk interface 105.

A prospective called party who is not a PBX subscriber is normally associated with an external communications device via a multi-digit number. Similarly, a prospective called party who is a PBX subscriber is associated with a multi-digit number or PBX extension which is typically a portion of the multi-digit number. This multi-digit number or PBX extension is often- times associated with an internal communications device but this is not required. Specifically, it is envisioned that the multi-digit number or PBX extension which is processed may establish a communications connection to an internal or external communications device associated with the PBX subscriber. Moreover, the device associated with the PBX subscriber may be changed by the subscriber at any time.

As is well-known, to establish a communications path between a calling party and a called party, either the PBX extension or multi-digit number of the called party is coupled through the communications system from the calling party's communications device. Network 104 may be a public network, private network or both and may include other PBXs so as to provide a network of interconnected PBXs. As is well-known, the internal and external communications devices can be any of a variety of types, such as station sets, personal computers, data terminals, facsimile terminals, video terminals, etc. While the disclosed embodiments will be described in reference to call forwarding of voice communications for which the internal and external communications devices will be subscriber station sets, forwarding of text, facsimile, and video communications is also contemplated and for which the internal and external communications devices would respectively be data, facsimile, and video terminals.

In accordance with the disclosed embodiments of the present invention, an incoming voice communications for a prospective called party normally associated with one of the internal communications devices can be forwarded to a specified alternative destination. In this context, the term "alternative destination" refers to one or more multi-digit numbers or PBX extensions designating a communications device not normally associated with a prospective called party. As is widely recognized, this forwarding capability allows a prospective called party to receive communications while away from his or her normally associated communications device. Now, utilizing the present invention, this call forwarding capability is enhanced by forwarding incoming communications to an alternative destination only after receiving verification of the called party's presence at such a destination.

While call forwarding can be arranged to activate upon some predetermined condition, such as no-answer, busy, out-of-service, etc., pursuant to the present invention, it is contemplated that forwarding is activated upon a no-answer condition, i.e., the communications device normally associated with the called party rings a predetermined number of times or can be activated immediately upon the PBX receiving the dialed digits or tones associated with a called party who has activated the present call forwarding scheme. The latter avoids any unnecessary delays in call processing.

The present invention also permits a prospective called party to specify a plurality of alternative destinations. These alternative destinations can then be accessed by the communications system either serially or simultaneously to determine at which of these alternative destinations the called party is present. Once this determination is made, the communications is forwarded to the alternative destination where the called party is present.

In one embodiment of the present invention, the necessary components to provide this identification procedure are incorporated within PBX 102. Alternatively, in another embodiment of the present invention, such components are embodied within an adjunct, designated as service system 101, which is connected to PBX 102 via telephone lines 106 and telephone line control link 107. This second arrangement advantageously permits incorporation of the present invention within an existing PBX.

In either embodiment, the communications can originate from any internal or external communications device other than the called communications device. The specified alternative destination(s) can be any internal or external communications device other than the called device.

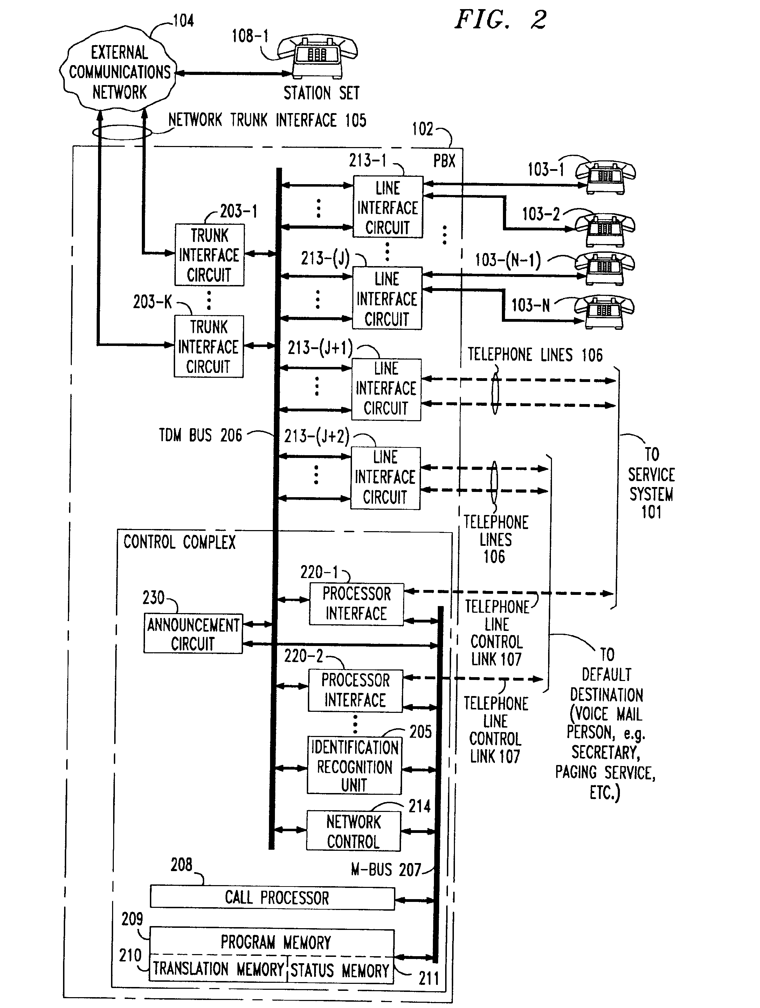

Refer now to FIG. 2. It will be assumed that an incoming voice communications has been originated by a calling party at communications device 108-1 for a called party normally associated with a particular internal communications device. This incoming voice communications is coupled through external communications network 104 to a trunk in network trunk interface 105. Each trunk is connected to time division multiplex (TDM) bus 206 via an associated one of trunk interface circuits 203-1 through 203-K. The term K is a predetermined integer typically less than N. Each trunk interface circuit provides the called party number to the TDM bus. This information is then passed through the network control unit214 and M-bus 207 to call processor 208. Call processor 208 then, utilizing the instructions stored in program memory 209, connects the incoming voice communications to the particular one of internal communications devices 103-1 through 103-N identified by the called party number. Program memory 209 is subdivided into two sections--translation memory 210 which stores translation and redirection data and status memory 211 which stores the current status of all of the lines, trunks and associated equipment.

The connection from the trunk interface circuit which terminates the trunk carrying the incoming voice communications is coupled to the TDM bus and thence to the identified internal communications device via an associated one of line interface circuits 213-1 through 213-J. The term J is a predetermined integer which is typically greater than K and less than N. In the disclosed PBX, it should be noted that a plurality of internal communications devices may be connected to one line interface unit through an associated port thereof. The PBX may also include a line interface circuit designated as 213-(J+1) and associated processor interface 220-1 for connection to service system 101. Preferably, the PBX also provides interconnection capability to a voice mail system or paging service via line interface circuit 213-(J+2) and processor interface 220-2. Announcement circuit 230 is also advantageously utilized to provide call progress announcements to a calling party and verbal prompts to either the calling or called party.

In prior art call forwarding arrangements, once call forwarding is activated for a particular called party, an incoming communications for that called party is forwarded to a communications device at the specified alternative destination. The telephone number or PBX extension of the device at the specified alternative destination and the associated line interface unit and port are determined from an examination of stored entries in translation memory 210 for the internal communications device normally associated with the called party. Pursuant to the first embodiment of the present invention, these entries are expanded to include the multi-digit telephone number or PBX extension associated with the communications device at the alternative destination. In addition, the operation of call processor 208 is modified, as will be discussed, and equipment, designated as identification recognition unit 205, is added to the PBX. Each identification recognition unit is adapted to examine signals from the communications device at the alternative destination for the presence of a predetermined identification signal after this device goes into an "off-hook" state and after a request by announcement circuit 230 for this identification signal is made. The identification signal indicates the called party's presence at the alternative destination and a variety of different identification signals can be utilized. For exam- pie, the identification signal could be a predetermined voice response, such as "This is John", from the called party or a predetermined code word, previously specified by the called party, which can be spoken by anyone. In such case, the identification recognition unit would include voice recognition circuitry which would compare the received voice response, or characteristics thereof, such as phonemes, of the person answering the incoming communications at the alternative destination with prerecorded, stored data previously supplied by the desired called party. If this comparison indicated the presence of the called party at the alternative destination, the identification recognition unit would signal the call processor to provide a communications connection between the calling and the called parties. Or, for example, the identification signal could be a prearranged password which would be stored in translation memory 210 and retrieved by the identification recognition unit. This unit would then compare this retrieved password with the password entered by the called party via the touch-tone pad on the communications device at the alternative destination. Upon receiving the prearranged password from the alternative destination, t he identification recognition unit would signal the call processor to provide a communications connection between the calling and called parties. In any event, if the expected identification was not received from an alternative destination, a communications connection would not be established by the call processor between the calling and called parties.

Call processor 208 uses identification recognition circuit 205 to permit a prospective called party to access the call processor for the purpose of modifying certain portions of his or her stored translation memory data. The identification recognition circuit in this activity provides a variety of functions including examining access requests for an appropriate password, converting touch-tone or voice signals to corresponding translation memory data, etc.

In the second embodiment of the present invention, service system 101 incorporates the necessary components to implement the present invention and is connected to PBX 102 via telephone lines 106 and telephone line control link 107. The former provides a voice communications path to the service system via line interface circuit 213-J while the latter provides control signals to the service system via processor interface 220. The format on telephone lines 106 may be any of a number of well-known arrangements, such as tip-ring, T1, Integrated Services Digital Network (ISDN) Basic Rate Interface (BRI) or Primary Rate Interface (PRI) or, for that matter, any proprietary format.

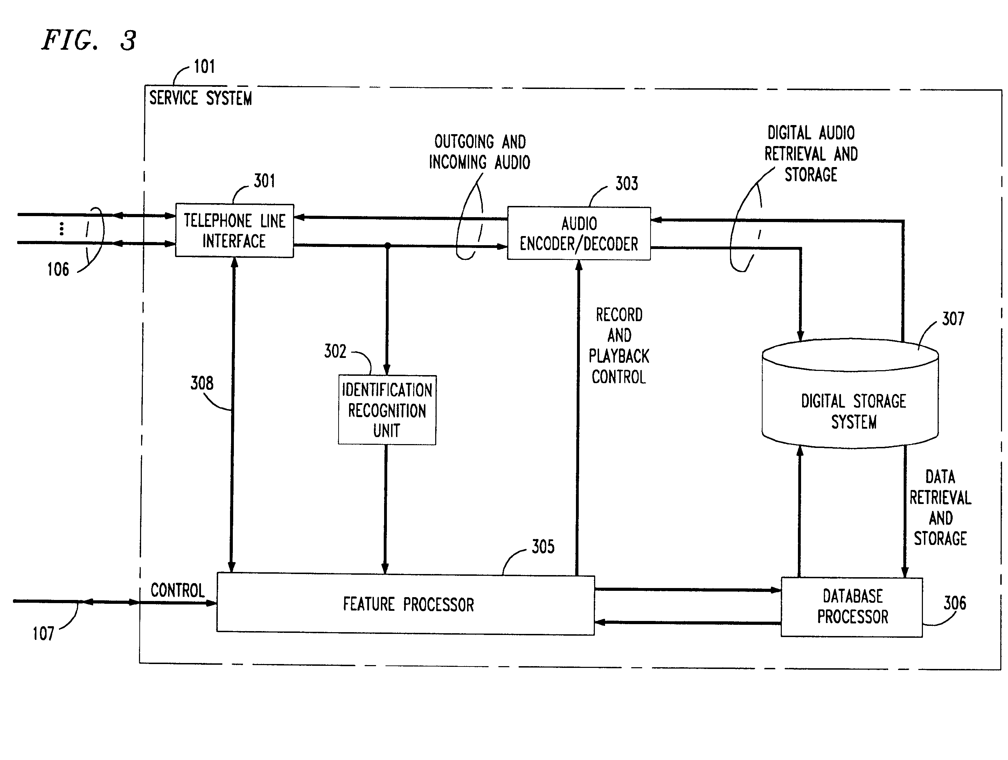

FIG. 3 shows the circuitry included within service system 101. Referring now also to FIG. 2, it should be noted that service system 101 is connected to PBX 102 via telephone lines 106 and telephone line control link 107. When an incoming communications for a called party is received, processing of the call begins by call processor 208 first examining the called party identification and determining whetheror not this party has activated the call forwarding feature. If so, the call processor connects this incoming communications to service system 101 via telephone lines 106 and telephone line control link 107. The called party identification is forwarded to the service system either through one of telephone lines 106 or through telephone line control link 107. In the latter case, feature processor 305 directly receives the called party identification. In the former case, the called party identification is coupled through telephone line interface 301 and extracted byeithervoice recognition circuitry 302 or in-band signalling decoder 304. The use of voice recognition circuitry permits the called party identification to be provided by a voice response. The use of the in-band signalling decoder permits the called party identification to be provided via in-band signals. The source of the called party identification can be either call processor 208 or the calling party. In any case, once feature processor 305 receives the called party identification, it interacts with database processor 306 and digital storage system 307 to determine how to continue processing the incoming communications. It is envisioned that such processing can involve a determination of whether or not the calling party is on a predetermined list stored in digital storage system 307 so as to permit a perspective called party to only provide call forwarding to a specified group of individuals. In addition, the calling party may be prompted as to whether or not he or she desires to have t heir call forwarded to an alternative destination supplied by the called party. In any event, once it is determined by the feature processor that the incoming communications should be forwarded, the feature processor initiates a communications to one or more alternative destinations specified in the digital storage system. This communications is established by forwarding an identification of each alternative destination to call processor 208 either through the telephone line control link 107 or through one of telephone lines 106. The telephone lines are accessible to the feature processor via lead 308. In accordance with the present invention, an announcement message is retrieved from the digital storage system by audio encoder/decoder 303 under the control of the feature processor. This announcement message, outputted to each of the alternative destinations, requests an identification signal be provided. This identification signal can take the various forms described previously. The presence of this identification signal is determined either by the voice recognition circuitry or by the in-band signalling decoder and interpreted therefrom by the feature processor. This interpretation involves comparing the detected identification with a previously provided identification stored in the digital storage system which is specific to each called party. If the detected and stored identifications are the same, then the feature processor instructs the call processor in the PBX to connect the incoming communications to the alternative destination from which the identification signal has been received. However, if the detected and stored identifications are not the same, the feature processor instructs the call processor to connect the incoming communications to a default destination, such as voice mail, a specified individual, or a paging service.

As with the first embodiment of the invention, in the second embodiment of the invention, a prospective called party may desire to access the adjunct for the purpose of administering his or her stored alternative destinations as well as the calling parties for whom the call forwarding scheme will be activated. Such access can either be provided by call processor 208 signalling the adjunct via the telephone line control link or one of telephone lines 106. With either access, identification recognition unit 302 provides the same functionality as described previously for identification recognition unit 205 in connection with a prospective called party modifying portions of his or her translation memory data.

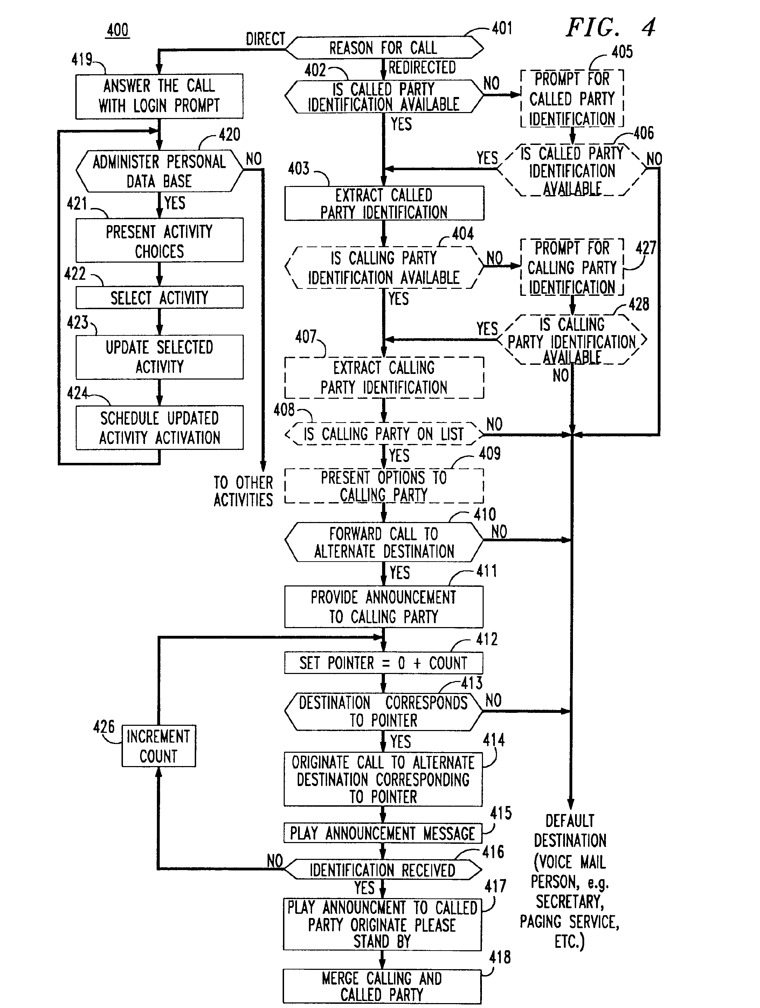

Refer now to FIG. 4 which shows the sequence of operations 400 provided by call processor 208 in the first embodiment of the invention and by feature processor 305 in the second embodiment of the invention. It will be assumed at this juncture that an incoming communications has been initiated to a called party who has activated the present call forwarding scheme. The operational sequence shown in FIG. 4 includes two subsequences. The first subsequence begins at step 402 and is followed to carry out the present call forwarding scheme. The second subsequence begins at step 419 and is followed when the called party desires to access certain ones of the translation memory entries corresponding to his or her normally associated internal communications device for administrative purposes.

At step 401, the processor determines the nature of the incoming communications, i.e., was the communications redirected or was it a direct communications. A redirected communications is one which is destined for a called party who has activated the call forwarding feature. A direct communications is one placed by a called party to the processor for the purpose of administering his/her database. If, at step 401, the incoming communications was redirected, at step 402, a determination is made as to whether the called party identification, i.e., the telephone number of PBX extension dialed by the calling party, is available. If so, it is extracted at step 403 and processing proceeds on to step 404. If this identification is not available, it is requested at step 405 and if now available at step 406, processing proceeds to step 403. If the called party identification is still not available, the incoming communications is directed to a default destination. While the called party identification will of- tentimes be available, it is recognized that when the present invention is embodied in an adjunct which interfaces a PBX utilizing a proprietary format, the called party identification may be in a form not recognizable by the adjunct processor. Accordingly, steps 402, 403, 405 and 406 are advantageously included.

At step 404, a determination is made as to whether the calling party identification is available. Such identification is presently forwarded through the network in many system applications. If, at step 404, the calling party identification is not available, the system advantageously prompts the calling party to provide such identification at step 427. This prompting can be performed by outputting an announcement message to the calling party requesting his/her name or telephone number. It is contemplated that the calling party can then provide such identification by speech or by inputting the identification via the touch-tone pad at the communications device being utilized by the calling party. At step 428, a determination is made if the calling party identification has been provided and, if so, processing proceeds on to step 407. If such identification has not been provided at step 428, the incoming communications is advantageously connected to a voice mail or default destination, the latter including a predetermined individual, e.g., the called party's secretary, or a paging service. If the calling party identification is available at step 404, it is extracted at step 407 and at step 408 is compared with a list of calling party identifications previously furnished by the prospective called party. Advantageously, such a comparison permits the present invention to be selectively used by a prospective called party for only a desired list of calling parties. If such selective call forwarding is not desired, then steps 404, 407, 408, 427 and 428 can be deleted.

If, at step 408, the calling party identification is on the permissible list of calling party identifications provided by the called party, processing proceeds on to step 409. If not, the calling party is connected to a voice mail system or a default destination. At step 409, the calling party is preferably presented various options via an announcement message. This step may also be deleted if not desired and the processing will merely proceed to step 410 and not give the calling party any alternative.

A number of different options may be provided to the calling party at step 409. For example, the calling party can be simply advised that the called party is presently unavailable and should be called later. Or, alternatively, the calling party may select to leave a message for the called party on either a voice mail system or with a preselected individual or with a paging service. Another option which may be presented to the calling party is to forward the call to an alternative destination in an attempt to reach the called party. Assuming this last option is selected, the communications is forwarded to the alternative destination at step 410. At step 411, the calling party is provided with an announcement advising that an attempt to reach the called party is being made.

It is contemplated that a prospective called party can provide the system with a plurality of alternative destinations where he/she may be reached. If this is so, the processor can then either place simultaneous calls to each such alternative destination or can initiate calls to each alternative destination in some predetermined order. It will be assumed that the latter process is being utilized and such processing is depicted by steps 412-416 and step 426.

At step 412, the processor sets an internal pointer to 0 plus the variable "count." The variable "count" has an initial value of 0. The system then establishes a communications to the alternative destination corresponding to the pointer's setting at steps 413 and 414. If there is no destination corresponding to the pointer's setting, the incoming communications is connected to either a voice mail system or to the default destination. An announcement message is provided by the system at step 415 to the person responding to the communications at the alternative destination. This announcement message is activated by the communications device at the alternative destination going into an off-hook state. The announcement advises the individual at this device that there is a communications for a specific named individual and a predetermined identification is requested. This identification can either be a predetermined password which is either spoken or inputted via the touch-tone pad or can be a predetermined voice response. At step 416, the system determines whether the predetermined identification has been received from the called party at the alternative destination. If so, at step 417, an announcement is provided to the called party that a communication is being forwarded. At step 418, a communications connection is established between the calling and called parties. If, however, the predetermined identification is not received at step 416, processing proceeds back to step 412 after the variable "count" is incremented by 1 at step 426. Accordingly, the system will originate calls in succession to the list of alternative destinations until an identification is received at step 416.

FIG. 4 also shows the sequence of operations provided by the processor for a direct communications. These operations are referenced as steps 419-424. If, at step 401, the communications was a direct one, the communications is answered and a login prompt is requested at step 419. At step 420, the calling party is asked by an announcement message whether or not administration of his or her personal database is desired. Response to this announcement can be provided by either speech or by inputting a Y for yes or an N for no via the touch-tone pad. If the response is N, processing proceeds on to other activities which are not the subject of the present invention. If, at step 420, administration of a called party's personal database is desired, a choice of activities is presented at step 421 from which one such activity is selected at step 422. Pursuant to the present invention, the selected activity would be the call forwarding feature, and at step 423 the calling party would be provided with the opportunity to update this feature by providing the telephone numbers or PBX extensions of one or more alternative destinations. At step 424, the calling party can schedule activation of the now updated call forwarding feature. Such activation can be at a specified future time or date or can be immediate.

It should, of course, be noted that while the present invention has been described in terms of an illustrative embodiment, other arrangements will be apparent to those of ordinary skill in the art. For example, while the present invention has been disclosed in reference to forwarding of voice communications in a PBX environment, the present invention is applicable to call routing of any communications, e.g., voice, data, text, facsimile, video, etc., in virtually any communications environment. For such other communications, the disclosed station set would be replaced by data terminals, facsimile machines, video terminals, etc. In addition, it should be noted that the incoming communications need not be forwarded from a first destination, where the called party has an associated communications device, to a second destination. The called party need not have an associated communications device at the first destination. Therefore, the first destination need not be one where the called party might be present but could be an intermediate location, such as a database location, where incoming communications for the called party are initially received and processed. At this intermediate location, the list of called party specified destinations is stored, the request for the identification signal is issued, and the presence of such a signal is detected. Finally, while the identification signal described in the embodiments is one that follows an off-hook signal, the apparatus utilized in the present invention need not be capable of detecting the off-hook signal. Indeed, the off-hook signal may not even be communicated to this apparatus.

## Claims

1. Call routing apparatus comprising
means responsive to incoming communications from a calling party to a called party for transmitting a signal to at least one destination associated with said called party, said signal indicating the arrival of said incoming communications;
means for detecting an identification signal from said destination, said identification signal indicating the called party's presence at one said destination and said identification signal following a first signal from said one destination; and
means for coupling said incoming communications to said one destination only if said identification signal is detected.

2. The apparatus of claim 1, wherein said first signal is representative of an off-hook signal, and/or said identification signal is either representative of spoken words of said called party, includes spoken words of said called party, or is representative of a predetermined sequence of alphanumeric characters.

3. The apparatus of claim 1, wherein said incoming communications includes an identification of said calling party and said transmitting means only transmits said signal to said one destination if said calling party is one of a number of predetermined calling parties, said apparatus optionally including means responsive to said incoming communications for requesting an identification of said called party, and/or means for receiving said incoming communications and requesting an identification of said calling party.

4. The apparatus of claim 1 wherein said transmitting means includes means responsive to said incoming communications for providing at least one announcement to the calling party and means for detecting said calling party's response thereto, a first one of said responses causing said transmitting means to transmit said signal to said one destination,
said means for detecting said calling party's response to said announcement optionally di- i-recting said coupling means to couple said incoming communications to an alternative destination when a second one of said calling party responses is detected.

5. The apparatus of claim 4, wherein said alternative destination is one associated with either a voice mail system, a paging system, or an individual otherthan said calling and said called parties.

6. The apparatus of claim 1, wherein said transmitting means transmits said signal to a plurality of different communications devices and said coupling means couples said incoming communications to one of said plurality of communications devices, said one communications device being that device from which said identification signal was received, said transmitting means optionally transmitting said signal to either each of said plurality of communications devices at one time, or to different ones of said plurality of communications devices in succession.

7. The apparatus of claim 1, wherein said apparatus is either integrated within a switching system, such as a PBX, or is disposed in an adjunct to a switching system.

8. The apparatus of claim 1, wherein said incoming communication is coupled to said apparatus only after said incoming communications has been directed to a first destination associated with said called party and said communications has not been answered at said first destination, and optionally includes means for receiving information prior to said incoming communications, said information determining operation of said coupling means.

9. The apparatus of claim 8, wherein said information also determines operation of said detecting means, or specifies said destination, or is supplied by said called party prior to said incoming communications, and/or optionally includes a number of predetermined calling parties, said coupling means optionally only being operative when said incoming communications is from one of said number of predetermined calling parties.

10. Call routing method comprising the steps of
receiving an incoming communications from a calling to a called party;
transmitting a signal to at least one destination associated with said called party, said signal indicating the arrival of said incoming communications;
detecting an identification signal from any said destination, said identification signal indicating the called party's presence at one said destination and said identification signal following a first signal from said one destination; and
coupling said incoming communications to said one destination only if said identification signal is detected.
